# EUROPEAN PATENT SPECIFICATION

(11) **EP 2 035 681 B1**
(45) Date of publication and mention of the grant of the patent: **07.04.2010**
(21) Application number: 07747547.3
(22) Date of filing: 02.07.2007
(51) Int. Cl.: F02M 21/02

(54) **INJECTOR ASSEMBLY**
INJEKTIONSANORDNUNG
ENSEMBLE D'INJECTION

(30) Priority: 03.07.2006 NL 2000120
(43) Date of publication of application: 18.03.2009
(73) Proprietor: Vialle Alternative Fuel Systems B.V., 5626 EA Eindhoven (NL)
(72) Inventor: TEN BROEKE, Sebastiaan Martinus Emanuel, 5492 NC Nijnsel (NL); VAN EIJCK, Petrus Maria, 5575 CA Luyksgestel (NL); GROEN, Leendert Rens, 5709 MN Helmond (NL); TANKENS, Cornelis Hendrik, 4281 KE Andel (NL); BEEM, Bob Alexander, 5709 ME Helmond (NL); JAASMA, Servatius Alfons Maria, 5627 TE Eindhoven (NL)
(74) Representative: Ketelaars, Maarten F.J.M.
(86) International application number: PCT/NL2007/050325
(87) International publication number: WO 2008/004866

(56) References cited:
- WO-A-98/51923
- US-A- 5 325 838
- US-A- 5 823 446

## Description

The present invention relates to an injector assembly comprising two injectors for metering/injecting a liquidized vapour, wherein each injector comprises an inlet side provided with an inlet opening for liquid vapour, an outlet side provided with an outlet opening for vapour, a delivery duct for the metered delivery of liquid vapour, as well as an electronic shut-off valve having an inlet duct connected to the inlet opening and an outlet duct connected to the delivery duct.

With internal combustion engines which run on liquidized vapour, such as LPG, use is made of injectors which have special properties in order to make them suitable for metering the liquidized vapour. Therefore, with a combustion engine which runs on two kinds of fuel, there is in each case a separate set of injectors for injecting the liquidized fuel. Such injectors may be provided as original equipment with an internal combustion engine. However, in many cases such injectors are also used in the subsequent modification of a combustion engine which originally ran on petrol or the like for use with liquidized vapour, such as LPG.

In the prior art, see for example WO 98/51923, it is customary to attach such injectors directly to the inlet manifold. Preferably, each inlet duct of the inlet manifold of an internal combustion engine is provided with such an injector. Lines are provided between such injectors, the length of which lines is dependent on the use.

When manufacturing large series of injectors which are adapted to a specific inlet manifold, it is possible to manufacture the combination comprising of injectors and connection lines in an economical manner.

However, when smaller series are being produced, this method of fitting is expensive, as high demands are imposed on the connections between two injectors. Such a connection line has to be able to withstand high temperatures and high pressure. In addition, when conveying liquidized vapour, measures have to be taken in order to prevent heat absorption of the liquidized gas flowing through the line as much as possible.

In addition, such injectors take up space and, especially in the case of retrofits, it is often found that insufficient space has been provided for such injectors, which means that compromises have to be found, as a result of which it is not always possible to provide the optimum injection location.

It is an object of the present invention to avoid these prior art drawbacks and to provide an injector assembly which can be fitted in a simple manner and can be modified in accordance with the prevailing circumstances.

This object is achieved with an above-described injector assembly, in that said injectors are provided with interacting coupling means, which are designed such that, when these injectors are coupled to one another, an inlet opening of an injector is connected to the outlet opening of another injector.

According to the present invention, the injectors can be coupled to one another in a simple manner, optionally with the use of a connecting piece. Using such a coupling makes connecting lines between the injectors superfluous, which connecting lines have to satisfy high demands and are not always easy to manufacture. As a result of the modular construction, any desired number of injectors can be coupled together. Any coupling technique conceivable in the prior art can be used for coupling the injectors which form part of the assembly. According to a preferred embodiment of the invention, the coupling consists of a system which is locked by rotation. More particularly, the housing of each injector is provided with protruding engagement means which can engage with one another and can thus provide the locking action. In combination with the optional connecting pieces or auxiliary rings, it is possible to produce an "injector block" of any desired size. The modular construction makes it possible to achieve a significant savings in terms of time and cost when producing the various components. In addition, it is possible to add further components to such an injector assembly, such as for example a safety shut-off valve. The latter may be provided with the same kind of coupling means and be coupled to the injector in a simple manner.

According to a further advantageous embodiment of the invention, the injectors of the injector assembly are coupled directly to one another, that is to say that no separate connecting piece is used. As a result, the distance between two injectors is as small as possible, which leads to a compact construction. It is very likely that this distance is not the distance between the individual inlet ducts of a manifold. However, according to a particular variant of the invention, flexible lines are provided which are connected to the delivery duct of each of the injectors and which can be conducted to a metering point on the inlet manifold. Such lines can be of considerable length. Tests have been conducted on lines having a length of 20 cm and up to that size no measurable difference in operation of the internal combustion engine was found, either with regard to the behaviour of the engine, uptake and the like, or with regard to the emissions. As a result, the present invention offers the possibility of fitting the injectors at some distance from the inlet manifold of the combustion engine. If desired, it is even possible to fit these at a fixed position with respect to the combustion engine which is suspended from vibration absorbers. The flexible lines are able to absorb this movement. This variant offers greater freedom with regard to the positioning of the injectors, since the opening where the lines are introduced into the inlet manifold can be embodied to be relatively simple and very compact. Such an input opening can be combined with an introduction pipe for liquidized vapour which is provided and/or insulated inside the inlet manifold, that is to say the inlet duct, in such a manner that no ice deposition occurs, as a result of which the delivery of liquidized vapour can take place in an uninhibited manner.

The present invention also relates to a fuel-injection system comprising a supply line and a discharge line for fuel, in which said supply line is connected to the inlet side of an injector assembly as described above and said discharge line is connected to the outlet side of an injector as described above.

The invention will be described in more detail with reference to an exemplary embodiment illustrated in the drawing, in which:
Fig. 1 diagrammatically shows a fuel system for liquidized vapour according to the present invention;
Fig. 2 shows an injector assembly according to the present invention in perspective view;
Fig. 3 shows details of an injector assembly according to the present invention; and
Fig. 4 shows a detail of the injector.

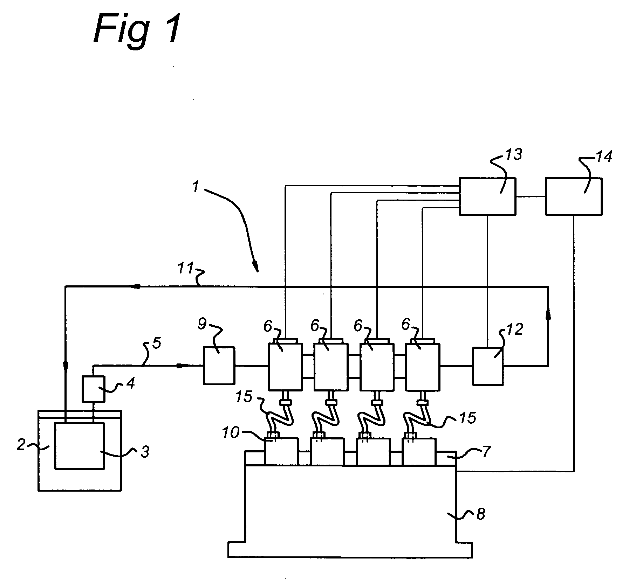

In Fig. 1, the system according to the invention is indicated by reference numeral 1. This comprises a storage tank 2 for a liquidized vapour, such as LPG. However, it should be understood that any liquidized vapour can be used. Examples which may be mentioned are butane and propane.

Inside the storage tank 2, a pump is fitted by means of which fuel is sucked out of the tank and pressurized. Via a safety shut-off valve 4, the fuel is pumped into supply line 5. The pressure increase with respect to the tank is in the range of 0.5-5 bar and, more particularly, approximately 3-4 bar. In the supply line 5, near the internal combustion engine 8 and the injectors 6, a further safety shut-off valve 9 is provided. During operation, safety shut-off valves 4 and 9 are completely open and when out of operation they are closed.

Downstream of the safety shut-off valve 9, injectors 6 are connected in series. In this case, the internal combustion engine is a four-cylinder engine which uses four injectors 6. These are electrically connected to a control unit 13.

Downstream of the last injector 6, a return line 11 is arranged in which a restriction 12 is incorporated. The effective cross section of this restriction 12 is variable and is controlled by the control unit 13. It should be understood that with a variant, a restriction 12 can be used having a non-variable through-flow cross-sectional area or a conventional pressure regulator.

The injectors 6 are arranged directly next to one another. Between the injectors 6 and the inlet manifold 7 of the combustion engine 8, flexible lines 15 extend. These are connected in a very compact manner to the small dispensing pipes 10 which are arranged in the respective suction pipe of the inlet manifold. Details thereof have not been shown, but in the part which extends in the air (gas) duct of the inlet manifold, they consist of a central part through which the liquid gas is introduced and a part which is arranged around it and insulated with respect thereto. During operation, this insulated part which is arranged around the central part has such a high temperature that there is no ice deposit there from moisture which is present in the air.

Control unit 13 is connected to ECU 14 of the internal combustion engine 8 which is designed to run on two kinds of fuel, that is to say can in addition be run on petrol, ethanol or the like. If the system is not designed to be run in combination with another fuel system, control unit 13 will be coupled to a number of sensors which indicate the operating parameters of the combustion engine. Also in the case of the system illustrated here, separate sensors may be provided in order to supply certain operating parameters of the combustion engine to the control unit and make control possible on the basis thereof.

The system described above works as follows:
Depending on the desired operating condition, such as, for example, determined by depressing the accelerator pedal in the case of a car engine, a certain amount of liquid fuel will have to be dispensed via the injectors 6. This amount is determined by control unit 13. Depending on this desired amount, control unit 13 will regulate the delivery of pump 3. According to the invention, this takes place in a very accurate manner. As a result, it is possible to achieve an almost constant return flow through the return line 11. Such a return flow is always necessary in order to be able to pump vapour bubbles out of the supply line and the injectors.

As indicated, it may optionally be possible to influence the effective cross section of the restriction 12 in order to ensure a substantially constant flow through return line 11. All this is dependent on the desired accuracy of the return flow through line 11.

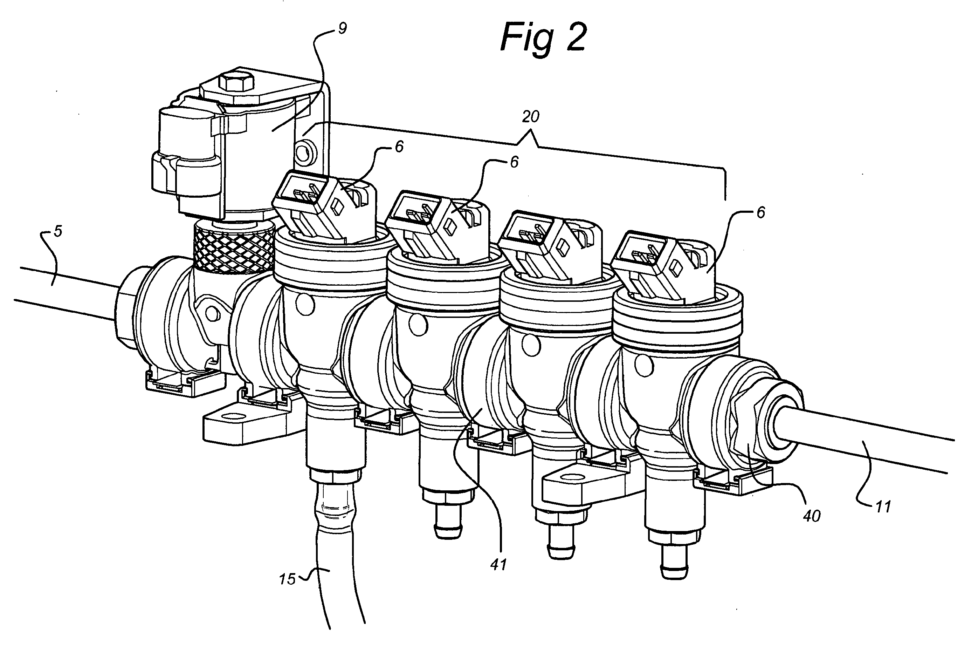

Fig. 2 shows an injector assembly 20 according to the present invention which, in this case, consists of four injectors 6. These are placed directly adjacent to one another by means of coupling. Reference numeral 9 indicates a safety shut-off valve which is connected to the first injector and to the line 15. The last injector 6 which is located furthest downstream is connected to a connecting piece 40 which is suitable for connection to the line 11.

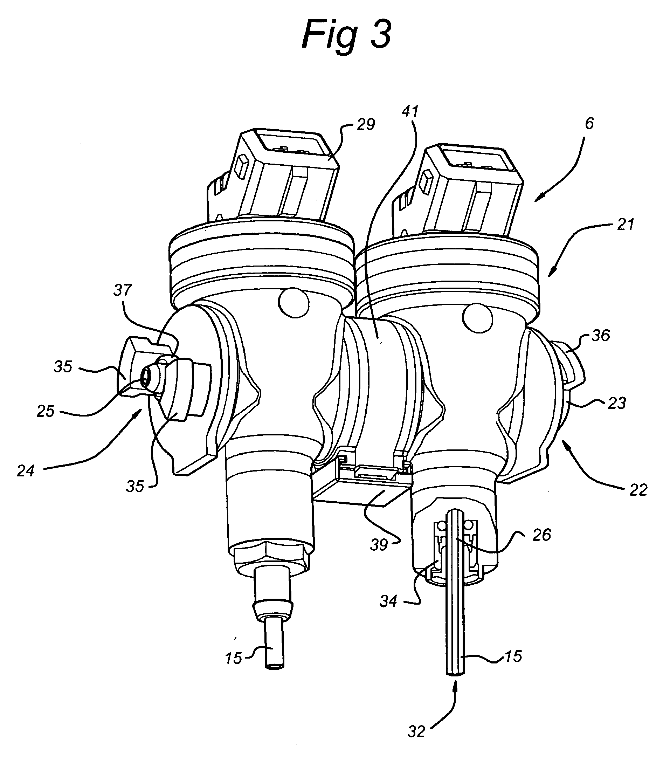

Figs. 2 and 3 show that each injector 6 comprises a housing 21. Housing 21 has an inlet side 22 with an inlet opening 23 and an outlet side 24 with an outlet opening 25.

The delivery duct for metering liquidized vapour is denoted by reference numeral 26. A line 15 is inserted into the latter, which line 15 is sealed with respect to the housing by means of a seal 34.

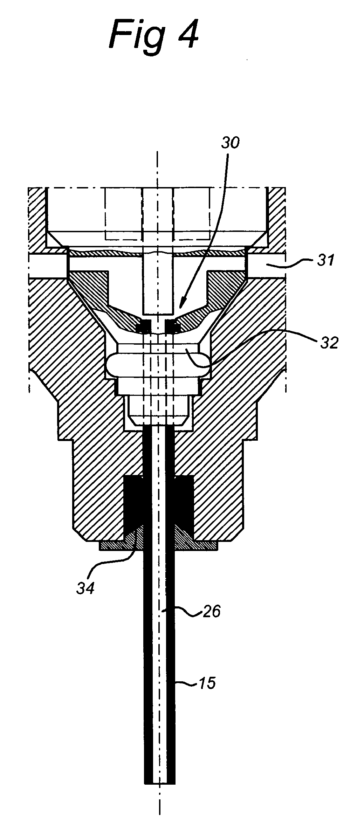

Reference numeral 30 in Fig. 4 denotes a shut-off valve which can be accommodated inside the housing 21. No details are given with regard to the operation of the shut-off valve, but in principle it comprises a needle valve in combination with a coil which is operated by means of a contact block 29. Shut-off valve 30 can be accommodated in the housing 21 with the aid of retainer ring 8. Shut-off valve 30 is provided with an inlet duct 31 and an outlet duct 32 which is controlled by means of the shut-off valve.

Each housing is provided with coupling means and/or coupling projections 35 and 36. These are designed to engage with auxiliary ring 41 while, in addition, O-rings 37 are provided. Auxiliary ring 41 can be attached by means of part 39.

Lips 29 are provided in order to attach housing 21 to any constructional part.

The above-described injectors can be connected to one another by rotation. By rotating the latter, the coupling projections 35 and coupling projections 36 will grip behind corresponding projections in an auxiliary ring 41 and the adjacent housings will be moved towards one another slightly, as a result of which the O-ring 37 is compressed in a sealing manner. If desired, a snap closure (not shown) is provided, as a result of which two adjacent injectors 6, once they have been sealingly placed in the correct position with respect to one another can no longer be loosened by rotation in a simple manner. During coupling together, the inlet side 22 of an injector is placed against the outlet side 24 of the other injector and the inlet opening 23 of one injector is thus connected to the outlet opening 25 of the other injector. In this manner, an optimum seal and connection between injectors can be achieved in a simple manner.

After reading the above, those skilled in the art will immediately be able to think of variants, in particular regarding the way in which coupling is achieved. It will also be understood that spacers can be placed between the injectors, which spacers are also provided with corresponding projections 35 and 36, respectively.

In addition, it will be understood that any injector block, optionally in combination with safety shut-off valve 9, can be achieved using such injectors. Such block may be assembled in a simple manner without the risk of the individuals who carry out the fitting causing leakage or any other faults which may lead to failure. This means that even unqualified staff can carry out the assembling operation.

It is possible to carry out such an assembling operation both during the production of the respective device and at a later point in time where an internal combustion engine is, for example, present in a motor vehicle, but still has to be fitted with a system for achieving operation by means of liquidized vapour.

In the attached claims, rights are sought for the present invention, but it should be understood that variants which are only described in the subclaims, that is to say not in combination with the main claim, also fall within the scope of protection of the present invention.

## Claims

1. Injector assembly (20) comprising two injectors (6) for metering/injecting a liquidized vapour, wherein each injector (6) comprises an inlet side (22) provided with an inlet opening (23) for liquid vapour, an outlet side (24) provided with an outlet opening (25) for vapour, a delivery duct (26) for the metered delivery of liquid vapour, as well as an electronic shut-off valve (30) having an inlet duct (31) connected to the inlet opening (23) and an outlet duct (33) connected to the delivery duct (26), **characterized in that** said injectors are provided with interacting coupling means (35, 36, 41), which are designed such that, when these injectors are coupled to one another, an inlet opening (23) of an injector is connected to the outlet opening (25) of another injector.

2. Injector assembly according to Claim 1, in which said inlet opening of said one injector is directly connected to the outlet opening of the other injector.

3. Injector assembly according to one of the preceding claims, in which said delivery duct (26) is designed in order to connect a flexible line (15) thereto.

4. Injector assembly according to one of the preceding claims, in which said interacting coupling means comprise interacting engagement means (35, 36, 41) extending from the inlet side of said one injector and from the outlet side of the other injector.

5. Injector assembly according to one of the preceding claims, in which said coupling means (35, 36, 41) are embodied such that coupling is achieved by rotating said two injectors with respect to one another.

6. Injector assembly according to Claim 5, in which said rotation with respect to one another is less than 180°.

7. Injector assembly according to one of the preceding claims, in which each injector comprises an electrical connecting part (28) and said coupling means are embodied such that when said injectors (6) are coupled to one another, said connecting parts (28) are oriented in substantially the same direction.

8. Injector assembly according to one of the preceding claims, comprising automatic locking means for automatically locking said injectors when they have been completely coupled together.

9. Injector assembly according to one of the preceding claims, in which each injector comprises a housing (21) having said inlet side, outlet side and delivery duct, and an interior comprising said electrical shut-off valve (30).

10. Fuel-injection system comprising a supply line (5) and a discharge line for fuel, in which said supply line is connected to the inlet side of an injector assembly according to one of the preceding claims and said discharge line is connected to the outlet side of an injector according to one of the preceding claims.

11. Fuel-injection system according to Claim 10, comprising a safety shut-off valve (9) provided between said line and one side of the injector assembly.

12. Fuel-injection system according to Claim 11, in which said safety shut-off valve is provided with coupling means (35, 36) for interacting with the coupling means of said injector assembly.

## Patentansprüche

1. Injektoranordnung (20), umfassend zwei Injektoren (6) zum Dosieren/Einspritzen eines verflüssigten Dampfes, wobei jeder Injektor (6) eine Einlassseite (22) umfasst, welche mit einer Einlassöffnung (23) für flüssigen Dampf versehen ist, eine Auslassseite (24), versehen mit einer Auslassöffnung (25) für Dampf, einen Beschickungskanal (26) für die dosierte Beschickung des flüssigen Dampfes, sowie ein elektronisches Absperrventil (30), welches einen mit der Einlassöffnung (23) verbundenen Einlasskanal (31) und einen mit dem Beschickungskanal (26) verbundenen Auslasskanal (33) aufweist, **dadurch gekennzeichnet, dass** die Injektoren mit interagierenden Kopplungsmitteln (35, 36, 41) versehen sind, welche derart gestaltet sind, dass wenn diese Injektoren miteinander gekoppelt sind, eine Einlassöffnung (23) eines Injektors mit der Auslassöffnung (25) eines anderen Injektors verbunden ist.

2. Injektoranordnung gemäß Anspruch 1, wobei die Einlassöffnung des einen Injektors direkt mit der Auslassöffnung des anderen Injektors verbunden ist.

3. Injektoranordnung gemäß einem der vorherigen Ansprüche, wobei der Beschickungskanal (26) gestaltet ist, um eine flexible Leitung (15) daran zu verbinden.

4. Injektoranordnung gemäß einem der vorherigen Ansprüche, wobei die interagierenden Kopplungsmittel interagierende Eingriffsmittel (35, 36, 41) umfassen, welche sich von der Einlassseite des einen Injektors und von der Auslassseite des anderen Injektors erstrecken.

5. Injektoranordnung gemäß einem der vorherigen Ansprüche, wobei die Kopplungsmittel (35, 36, 41) derart ausgebildet sind, dass Koppeln durch Drehen der zwei Injektoren in Bezug zueinander erreicht wird.

6. Injektoranordnung gemäß Anspruch 5, wobei die Drehung in Bezug zueinander weniger als 180° beträgt.

7. Injektoranordnung gemäß einem der vorherigen Ansprüche, wobei jeder Injektor einen elektrischen Verbindungsbereich (28) umfasst und die Kopplungsmittel derart gestaltet sind, dass wenn die Injektoren (6) miteinander gekoppelt werden, die Verbindungsbereiche (28) im Wesentlichen in der gleichen Richtung ausgerichtet sind.

8. Injektoranordnung gemäß einem der vorherigen Ansprüche, umfassend automatische Verriegelungsmittel zum automatischen Verriegeln der Injektoren, wenn sie vollständig miteinander gekoppelt worden sind.

9. Injektoranordnung gemäß einem der vorherigen Ansprüche, wobei jeder Injektor ein Gehäuse (21) umfasst, welches eine Einlassseite, eine Auslassseite und einen Beschickungskanal aufweist, und einen Innenbereich, welcher das elektrische Absperrventil (30) umfasst.

10. Kraftstoffeinspritzsystem, umfassend eine Versorgungsleitung (5) und eine Ablaufleitung für Kraftstoff, wobei die Versorgungsleitung mit der Einlassseite einer Injektoranordnung gemäß einem der vorherigen Ansprüche verbunden ist und die Ablaufleitung mit der Auslassseite eines Injektors gemäß einem der vorherigen Ansprüche verbunden ist.

11. Kraftstoffeinspritzsystem gemäß Anspruch 10, umfassend ein Sicherheitsabschaltventil (9), welches zwischen der Leitung und einer Seite der Injektoranordnung angeordnet ist.

12. Kraftstoffeinspritzsystem gemäß Anspruch 11, wobei das Sicherheitsabschaltventil mit Kopplungsmitteln (35, 36) versehen ist, um mit den Kopplungsmitteln der Injektoranordnung zu interagieren.

## Revendications

1. Ensemble d'injection (20) comprenant deux injecteurs (6) pour doser/injecter de la vapeur liquéfiée, dans lequel chaque injecteur (6) comporte un côté entrée (22) pourvu d'une ouverture d'entrée (23) pour de la vapeur liquide, un côté sortie (24) muni d'une ouverture de sortie (25) pour de la vapeur, un conduit d'amenée (26) pour la fourniture dosée de vapeur liquide, ainsi qu'une électrovanne d'arrêt (30) ayant un conduit d'entrée (31) relié à l'ouverture d'entrée (23) et un conduit de sortie (33) relié au conduit d'amenée (26), **caractérisé en ce que** lesdits injecteurs sont munis de moyens de raccordement (35, 36, 41) coopérant les uns avec les autres, qui sont conçus de façon que, lorsque ces injecteurs sont raccordés l'un à l'autre, une ouverture d'entrée (23) d'un injecteur soit reliée à l'ouverture de sortie (25) d'un autre injecteur.

2. Ensemble d'injection selon la revendication 1, dans lequel ladite ouverture d'entrée d'un premier desdits injecteurs est directement reliée à l'ouverture de sortie de l'autre injecteur.

3. Ensemble d'injection selon l'une quelconque des revendications précédentes, dans lequel ledit conduit d'amenée (26) est conçu afin d'y raccorder un flexible (15).

4. Ensemble d'injection selon l'une quelconque des revendications précédentes, dans lequel lesdits moyens de raccordement coopérant les uns avec les autres sont constitués par des moyens de mise en communication (35, 36, 41) coopérant les uns avec les autres, s'étendant depuis le côté entrée dudit premier injecteur et depuis le côté sortie de l'autre injecteur.

5. Ensemble d'injection selon l'une quelconque des revendications précédentes, dans lequel lesdits moyens de raccordement (35, 36, 41) sont réalisés de telle manière que le raccordement s'effectue en faisant tourner les deux injecteurs l'un par rapport à l'autre.

6. Ensemble d'injection selon la revendication 5, dans lequel ladite rotation de l'un par rapport à l'autre est de moins de 180°.

7. Ensemble d'injection selon l'une quelconque des revendications précédentes, dans lequel chaque injecteur comporte une pièce de connexion électrique (28) et lesdits moyens de raccordement sont réalisés de telle sorte que, lorsque lesdits injecteurs (6) sont raccordés l'un à l'autre, lesdites pièces de connexion (28) sont orientées sensiblement dans la même direction.

8. Ensemble d'injection selon l'une quelconque des revendications précédentes, comprenant des moyens de verrouillage automatiques pour verrouiller de manière automatique lesdits injecteurs quand ils ont été complètement raccordés l'un à l'autre.

9. Ensemble d'injection selon l'une quelconque des revendications précédentes, dans lequel chaque injecteur comporte un boîtier (21) ayant un côté entrée, un côté sortie et un conduit d'amenée, et un intérieur contenant ladite électrovanne d'arrêt (30).

10. Système d'injection de carburant comprenant une tubulure d'alimentation (5) et une tubulure de refoulement pour du carburant, dans lequel ladite tubulure d'alimentation est reliée au côté entrée d'un ensemble d'injection selon l'une quelconque des revendications précédentes et ladite tubulure de refoulement est reliée au côté sortie d'un injecteur selon l'une quelconque des revendications précédentes.

11. Système d'injection de carburant selon la revendication 10, comprenant une vanne d'arrêt de sécurité (9) installée entre ladite tubulure et un côté de l'ensemble d'injection.

12. Système d'injection de carburant selon la revendication 11, dans lequel ladite vanne d'arrêt de sécurité est munie de moyens de raccordement (35, 36) destinés à coopérer avec les moyens de raccordement dudit ensemble d'injection.
